# EUROPEAN PATENT SPECIFICATION

(11) **EP 4 253 178 B1**
(45) Date of publication and mention of the grant of the patent: **27.11.2024**
(21) Application number: 23160636.9
(22) Date of filing: 08.03.2023
(51) Int. Cl.: B60W 10/06, B60W 10/08, B60W 20/10, B60W 30/182, B60W 50/08

(54) **A SYSTEM FOR SELECTING A RIDE MODE OF A VEHICLE AND METHOD THEREOF**
SYSTEM ZUR AUSWAHL EINES FAHRMODUS EINES FAHRZEUGS UND VERFAHREN DAFÜR
SYSTÈME DE SÉLECTION D'UN MODE DE CONDUITE D'UN VÉHICULE ET PROCÉDÉ ASSOCIÉ

(30) Priority: 31.03.2022 IN 202241019769
(43) Date of publication of application: 04.10.2023
(73) Proprietor: TVS Motor Company Limited, 600006 Chennai (IN)
(72) Inventor: Gullyal, Avinash, 600 006 Chennai (IN); Kumar, S Dhinesh, 600 006 Chennai (IN); Mazumdar, Dipanjan, 600 006 Chennai (IN); Subramoniam, Chidambaram, 600 006 Chennai (IN)
(74) Representative: Patentanwaltskanzlei Matschnig & Forsthuber OG

(56) References cited:
- US-A1- 2007 276 549
- US-A1- 2013 030 604
- US-A1- 2021 170 909

## Description

### FIELD OF THE INVENTION

The present invention generally relates to a system for selecting a ride mode in a vehicle and a method thereof.

### BACKGROUND OF THE INVENTION

In a conventional electric or hybrid vehicle, a rider is provided with a feature where rider can select among multiple ride modes available in the vehicle. Different ride modes are provided for range optimization of the vehicle, based on the route taken by the rider. These modes can be either economy mode or power mode or any other mode depending upon the requirement of the rider. In economy mode, less battery energy is consumed while in power mode, more battery energy is consumed.

There are multiple occasions when a ride mode can be selected. Ride mode can be selected either from the beginning when the vehicle starts or one can switch to other modes while riding the vehicle. In US patent application no. US 2007/276549 A1, a driving force control apparatus of a vehicle is provided. A control mode arbitration calculation portion of the driving force control apparatus sets a mode corresponding to the request mode as a control mode. The control mode arbitration calculation portion further determines a mode limitation condition based on a driving condition parameter, and forcedly switches the control mode to a specific mode stored in the memory unit when the mode limitation condition is satisfied. This prior art document provides that the vehicle automatically switches the driving mode of the vehicle depending on satisfaction of the mode limitation conditions.

In the existing vehicles, a switch is provided to switch amongst the available drive modes. The rider has to be aware of how many times he has to press the switch or how long he has to press the switch to select the different modes. Also, such switches when pressed accidentally may also change the mode since there is no interlock for change in the mode of the vehicle. Also in some vehicles, a default ride mode is set and if the rider wants to switch to the other ride mode, then in that case the vehicle has to be driven for some duration and then only it can switch to the other ride mode.

In the existing vehicles, switching from low energy mode (economy mode) to high energy mode (power mode) is done smoothly and the rider does not feel any jerk or discomfort. But the switching from high energy mode (power mode) to low energy mode (economy mode) will be jerky and uncomfortable for the rider. Also, there is no interlock to avoid such transition.

The jerky ride or sudden acceleration and deceleration in transition between the ride modes will also lead to poor performance of the battery and the motor.

Thus, there is a need in the art for a system and a method for selecting a ride mode of the vehicle which can addresses at least the aforementioned problems.

### SUMMARY OF THE INVENTION

In one aspect, the present invention is directed towards a system for selecting a ride mode of a vehicle. The system has a first switch disposed on the vehicle in proximity to a rider. The first switch generates a first input signal to switch to one of a first mode and a second mode from an idle mode. The system further has a second switch disposed on the vehicle in proximity to the rider. The second switch generates a second input signal to switch between the first mode and the second mode. A control unit is communicably coupled to the first switch and the second switch. The control unit is configured to select the ride mode to be one of an idle mode, the first mode and the second mode of the vehicle. The selection is based on a combination of one or more vehicle parameters, the first signal, and the second signal in real-time.

In an embodiment of the invention, the control unit is configured to start the vehicle in the idle mode when a key is operated or by keyless authentication. The control unit receives the one or more vehicle parameters from a plurality of sensors of the vehicle or a Vehicle Control Unit (VCU). The control unit further receives the first input signal and a brake signal from a brake switch for a pre-defined time. The control unit is configured to switch to one of the first mode or the second mode from the idle mode when the first input signal and the brake signal are received and the one or more vehicle parameters satisfy a pre-defined set of conditions. The control unit is further configured to receive the second input signal and a throttle input value from a throttle position sensor (TPS). The control unit is configured to switch from the first mode to the second mode when the second input signal is received and the throttle input value is less than a first throttle threshold. Or the control unit is configured to switch from the second mode to the first mode when the second input signal is received, the throttle input value is less than a second throttle threshold and a vehicle speed is less than a threshold speed.

According to the invention, the control unit is configured to prohibit the switching from the second mode to the first mode on receiving the second input signal when the throttle input value is greater than a second throttle threshold and/or the vehicle speed is greater than the threshold speed.

In an embodiment of the invention, the one or more vehicle parameters received by the control unit has a battery charger connection status, a side stand switch status, the vehicle turned OFF status and an idling time of the vehicle.

In another embodiment of the invention, one of the first mode and the second mode is a default mode set by the rider or an Original Equipment Manufacturer (OEM).

In a further embodiment of the invention, the first mode is an economy mode and the second mode is a power mode.

In yet another embodiment of the invention, the first switch and the second switch are a press and release switch.

In another aspect of the invention, the method for selecting a ride mode of a vehicle has the steps of receiving starting a vehicle by a control unit in an idle mode as the ride mode of the vehicle when a key is operated or by keyless authentication; receiving by the control unit one or more vehicle parameters from at least one of a plurality of sensors and Vehicle Control Unit (VCU); generating by a first switch a first input signal to switch to a default mode from an idle mode, the default mode being one of a first mode and a second mode; receiving by the control unit the first input signal and a brake signal from a brake switch for a pre-defined time; switching the ride mode of the vehicle from the idle mode to one of the first mode and the second mode by the control unit when the first input signal and the brake signal are received, and the one or more vehicle parameters satisfy a pre-defined set of conditions; and, generating by a second switch a second input signal to switch between the first mode and the second mode. The method further has the steps of receiving by the control unit the second input signal and a throttle input value from a throttle position sensor (TPS) and switching by the control unit the ride mode between the first mode and the second mode on receiving the second signal, and throttle input value, when the vehicle is in motion

According to the invention, the method has the steps of switching the ride mode of vehicle from the first mode to the second mode by the control unit when the second input signal is received and the throttle input value is less than a first throttle threshold; or switching from the second mode to the first mode by the control unit when the second input signal is received the throttle input value is less than a second throttle threshold and a vehicle speed is less than a threshold speed.

In an embodiment of the invention, the method has the step of prohibiting by the control unit the switching from the second mode to the first mode on receiving the second input signal when the throttle input value is greater than a second throttle threshold and/or the vehicle speed is greater than the threshold speed.

In an embodiment of the invention, the one or more parameters includes a battery charger connection status, a side stand switch status, the vehicle turned OFF status and an idling time of the vehicle.

In an embodiment of the invention, the first mode is an economy mode and the second mode is a power mode.

In an embodiment of the invention, the first switch and the second switch are a press and release switch.

In an embodiment of the invention, the default mode is set by the rider or an Original Equipment Manufacturer (OEM).

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a perspective view of a vehicle, in accordance with an embodiment of the invention.
Figure 2 illustrates a block diagram of a system for selecting a ride mode of a vehicle, in accordance with an embodiment of the invention.
Figure 3A and 3B illustrates a method for selecting the ride mode of the vehicle, in accordance with an embodiment of the invention.
Figure 4A, 4B, 4C and 4D illustrates the method for selecting the ride mode of the vehicle, in accordance with an embodiment of the invention.

### DETAILED DESCRIPTION OF THE INVENTION

Various features and embodiments of the present invention here will be discernible from the following further description thereof, set out hereunder. In the ensuing exemplary embodiments, the vehicle is a two-wheeled electric vehicle. However, it is contemplated that the disclosure in the present invention may be applied to any automobile capable of accommodating the present subject matter without defeating the scope of the present invention.

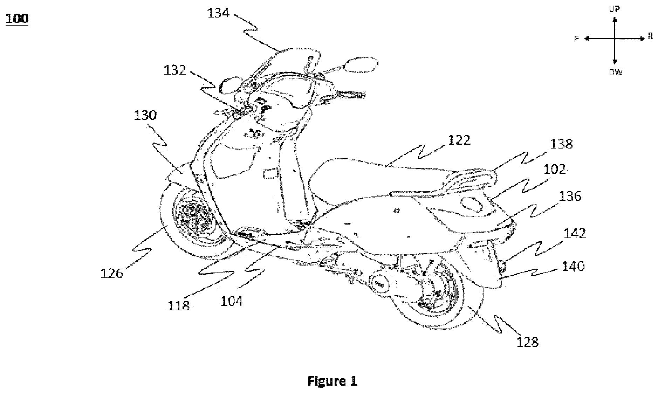

As illustrated in Figures 1, the vehicle 100 is a scooter type two-wheeled vehicle in the illustrated embodiments. In an embodiment, the vehicle 100 is an electric or a hybrid vehicle. It may be contemplated that the vehicle 100 can be any other kind of two-wheeled vehicle or three-wheeled vehicle. Thus, the illustrated examples of two-wheeled scooter vehicle should not be meant limiting the scope of the present invention. The terms "electric vehicle" and "vehicle" are interchangeably used in this disclosure. However, both the terms "electric vehicle" and "vehicle" are one and the same, and the term "vehicle" is used for brevity.

Figure 1 illustrates a schematic view of a vehicle 100, in accordance with an embodiment of the present invention. As an example, the motor vehicle 100 is a scooter type vehicle. The vehicle 100 has a prime mover (not shown) that is disposed behind a floorboard 104 and below a seat assembly 122 and/or a storage bin (not shown). The prime mover is one of an internal combustion engine or an electric motor adapted to provide motive force for vehicle movement. The vehicle 100 has a front wheel 126, a rear wheel 128 and a frame member (not shown). On the floor 118, a floorboard assembly (not shown) is mounted for supporting feet of a rider.

A head pipe (not shown) connects to the frame member (not shown). The head pipe supports a steering shaft (not shown) and a front suspension (not shown) attached to the steering shaft through a lower bracket [not shown]. The front suspension supports the front wheel 126. The upper portion of the front wheel 126 is covered by a front fender 130 mounted to the front suspension. In an embodiment, the front fender 130 is movable along with the front wheel 126, during travel over undulations on a road surface. A handlebar 132 is fixed to upper bracket (not shown) and can rotate about the steering shaft for turning the vehicle 200. A headlight (not shown), a visor guard 134 and instrument cluster (not shown) is arranged on an upper portion of the head pipe.

Further, a rear suspension (not shown) is provided to the rear wheel 128 for dampening the vibrations induced during travel of the vehicle 100 over undulations on the road surface. A taillight unit 136 is disposed at the end of the vehicle 100 and at the rear of the seat assembly 122. A grab rail 138 is also provided for facilitating the grip and/or balance to the rider on the vehicle 200 during movement. The vehicle 100 further includes a front wheel 126 and a rear wheel 128 driven by an electric motor (not shown) or an Internal Combustion engine. The electric motor receives a traction power from one or more power sources like a battery (not shown) for movement of the vehicle 100. A rear fender 140 is disposed above the rear wheel 128.

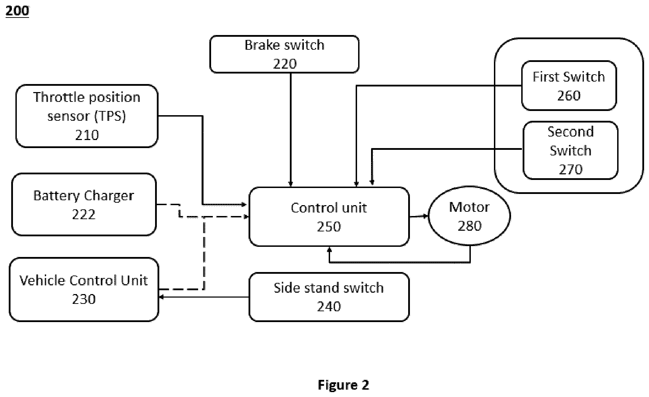

Figure 2 illustrates a block diagram of the system 200 for selecting a ride mode of the vehicle 100. The system 200 is on-board the vehicle 100. The system 200 comprises a first switch 260, a second switch 270, and a control unit 250. The first switch 260 is disposed on the vehicle 100 in proximity to a rider. The first switch 260 is configured to generate a first input signal to switch to one of a first mode and a second mode from an idle mode. In an embodiment, one of the first mode and the second mode is a default mode set by the rider or an Original Equipment Manufacturer (OEM). In another embodiment, the rider can select any ride mode as the default mode for the vehicle 100 via his mobile app. In a further embodiment, the first mode is an economy mode and the second mode is a power mode. The economy mode consumes less battery energy while the power mode consumes more battery energy. On starting the vehicle 100, the vehicle 100 is in idle mode and stationary. On pressing the first switch 260, the vehicle 100 switches from idle mode to the economy or power mode, whichever is set as default mode. The system 200 further comprises the second switch 270 disposed on the vehicle 100 in proximity to the rider. The second switch 270 is configured to generate a second input signal to switch between the first mode and the second mode. In an embodiment, the first switch 260 and the second switch 270 are press and release switches.

In another embodiment, a brake switch 220 is provided in the existing brake lever of the vehicle 100. The brake switch 220 will provide a signal to a control unit 250 upon operation of the brake lever.

As shown in Figure 2, the first switch 260, the second switch 270 and the brake switch 220 are communicably coupled to the control unit 250. the control unit 250 will receive a first input signal, a second input signal and a brake signal upon operating the first switch 260, the second switch 260 and the brake switch 220 respectively. In an embodiment, the control unit 250 controls a traction motor 280 to meet the desired output speed based on the throttle input value received from a throttle position sensor (TPS) 210 and battery State of charge. The control unit 250 is connected with motor 280 to receive the hall sensor signal and compute the motor RPM and vehicle speed accordingly.

The control unit 250 is configured to start the vehicle 100 in the idle mode when a key is operated or by keyless authentication. The control unit 250 is further configured to receive one or more vehicle parameters from a plurality of sensors of the vehicle 100 or a Vehicle Control Unit (VCU) 230. In an embodiment, the plurality of sensors includes but is not limited to the brake switch 220, a vehicle speed sensor and the throttle position sensor (TPS) 210. In an embodiment, the control unit 250 receives one or more vehicle parameters from VCU 230 and a battery charger 222 through a communication bus such as CAN. The communication bus has been represented by dotted lines in Figure 2. In another embodiment, the one or more vehicle parameters received by the control unit 250 comprise the battery charger connection status, a side stand switch status, the vehicle turned OFF status, and an idling time of the vehicle. The control unit 250 is further configured to select the ride mode to be one of the idle mode, the first mode and the second mode of the vehicle 100 which is based on a combination of one or more vehicle parameters, the first signal, and the second signal in real-time.

In an embodiment, when the first switch 260 is pressed and the brake lever (not shown) is operated for a predefined time, the control unit 250 will receive the first input signal and the brake signal. The control unit 250 is further configured to switch to one of the first mode or the second mode from the idle mode when the first input signal and the brake signal are received, and the one or more vehicle parameters satisfy a pre-defined set of conditions. In an embodiment, the pre-defined set of conditions comprise the condition when the side stand is not engaged, brake engaged, battery charger not operational, an idling time of the vehicle is greater than 5 seconds, and the battery charge level is sufficient to start. When conditions like these are satisfied then only the vehicle 100 will switch to one of the first mode or the second mode from the idle mode.

The control unit 250 is configured to receive the second input signal when the second switch 270 is pressed and the throttle input value from the throttle position sensor (TPS) 210. When the second input signal is received by the control unit 250, if the throttle input value is less than a first threshold then the control unit 250 switches from the first mode to the second mode. Further, when the second input signal is received from the control unit 250, if the throttle input value is less than a second throttle value and the vehicle speed is less than a threshold speed then the control unit 250 switches from the second mode to the first mode.

In a further embodiment, the control unit 250 is configured to prohibit the switching from the second mode to the first mode on receiving the second input signal when the throttle input value is greater than the second throttle threshold and/or the vehicle speed is greater than the threshold speed.

In an example, let suppose that the vehicle 100 is configured such that a top speed of 45km/hr is set for the first mode and a top speed of 80km/hr is set for the second mode. Let's assume that the first threshold throttle value is 15%, the second threshold throttle value is 40% and the threshold speed to change ride mode from the second mode to the first mode is 40 km/h. When switching from the first mode to the second mode, if the throttle input value is not checked with the first throttle threshold such as 15% and throttle value is already 50%, then the rider will feel loss of control of the throttle of the vehicle and there will be sudden acceleration in the vehicle. This sudden acceleration is prevented by the present invention. As per present invention, the vehicle 100 will switch to the second mode from the first mode only when the throttle input value is less than the first throttle threshold such as 15%. Similarly, when switching from the second mode to the first mode, if the throttle input value is 100% and the vehicle 100 is running at 80 km/h, then the rider will feel the loss of throttle control over the vehicle 100 and vehicle starts decelerating to the top speed of the first mode. This sudden deceleration is prevented by the present invention. The vehicle 100 will not switch to the first mode from the second mode even when the second switch 270 is pressed because the throttle input value is greater than the second throttle threshold and/or the vehicle speed is greater than the threshold speed.

In an embodiment, the vehicle 100 enters the idle mode when it is started then the ride mode is to be selected. The selection of ride mode is made in such a way that the vehicle 100 enters a default riding mode on starting vehicle or resetting or turning OFF of the vehicle and enter into a previous driven mode if the vehicle 100 is not power reset.

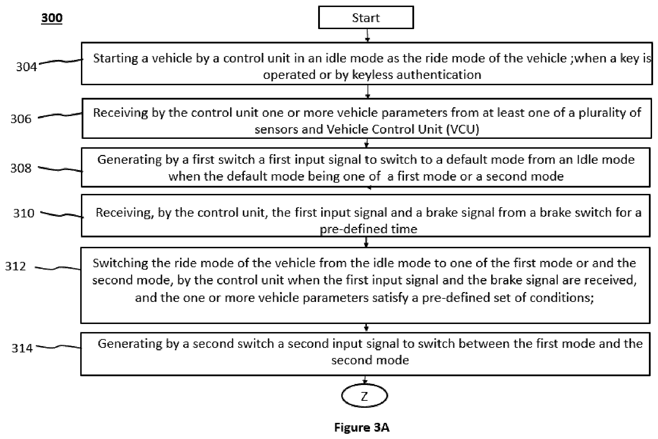

In another aspect, the present invention relates to a method 300 for selecting a ride mode of a vehicle, as referenced above. Figure 3A illustrates the method steps involved in the method 300. At step 304, the vehicle 100 is started by a control unit 250 in an idle mode as the ride mode of the vehicle 100 when a key is operated or by keyless authentication.

At step 306, one or more vehicle parameters are received by the control unit 250. The one or more vehicle parameters are received from at least one of a plurality of sensors and Vehicle Control Unit (VCU) 230. In an embodiment, the one or more parameters comprising a battery charger connection status, a side stand switch status, the vehicle turned OFF status and an idling time of the vehicle 100.

At step 308, a first input signal is generated by a first switch 260. The first input signal switches to a default mode from an idle mode when the default mode being one of a first mode and a second mode. in an embodiment, the first switch 260 is a press and release switch. In another embodiment, one of the first mode and the second mode is a default mode set by the rider or an Original Equipment Manufacturer (OEM). In a further embodiment, the rider can select any ride mode as the default mode for the vehicle 100 via his/her mobile application. In yet another embodiment, the first mode is an economy mode and the second mode is a power mode. The economy mode consumes less battery energy while the power mode consumes more battery energy. In the idle mode, the vehicle 100 is ready to get started but it is not in the motion state.

At step 310, the first input signal and a brake signal from a brake switch 220 are received by the control unit 250 for a pre-defined time.

At step 312, the ride mode of the vehicle 100 is switched from the idle mode to one of the first mode and the second mode by the control unit 250 when the first input signal and the brake signal are received and the one or more vehicle parameters satisfy a pre-defined set of conditions. In an embodiment, the pre-defined set of conditions comprise the condition when the side stand is not engaged, brake engaged, battery charger not operational, an idling time of the vehicle is greater than 5 seconds, and the battery charge level is sufficient to start.

At step 314, a second input signal is generated by the control unit 250 to switch between the first mode and the second mode. In an embodiment, the second switch 270 is a press and release switch.

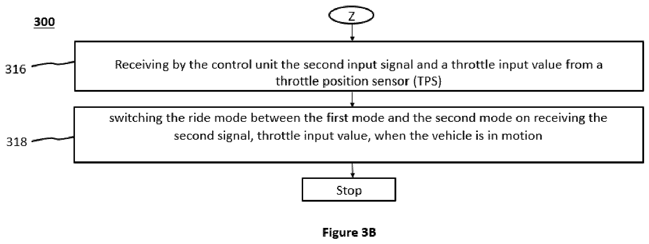

As illustrated in Figure 3B at step 316, the second input signal and a throttle input value from a throttle position sensor (TPS) 210 are generated by the control unit 250.

At step 318, the ride mode is switched between the first mode and the second mode by the control unit 250 on receiving the second signal, throttle input value, when the vehicle 100 is in motion.

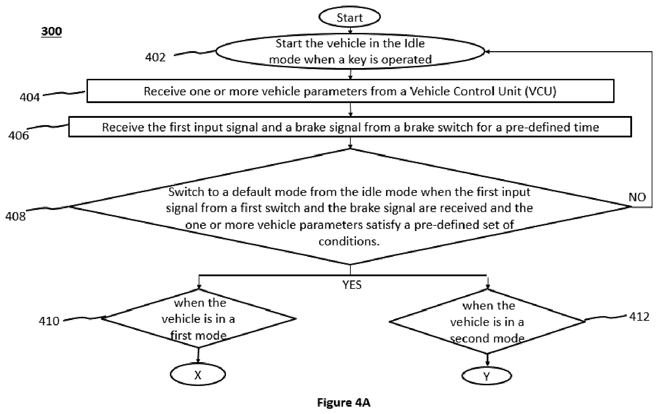

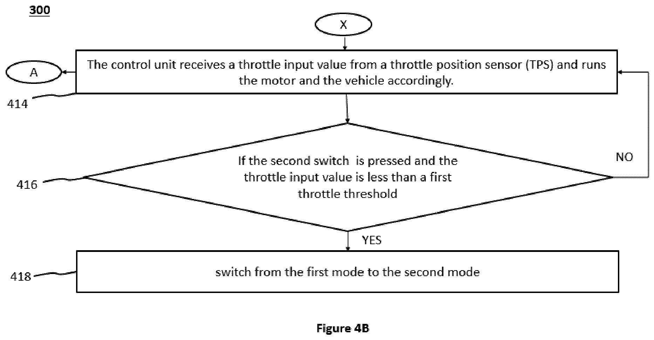

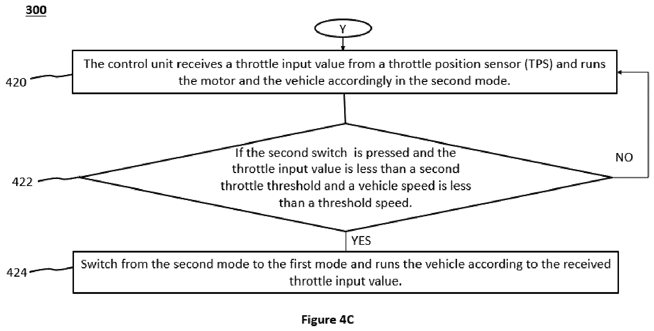

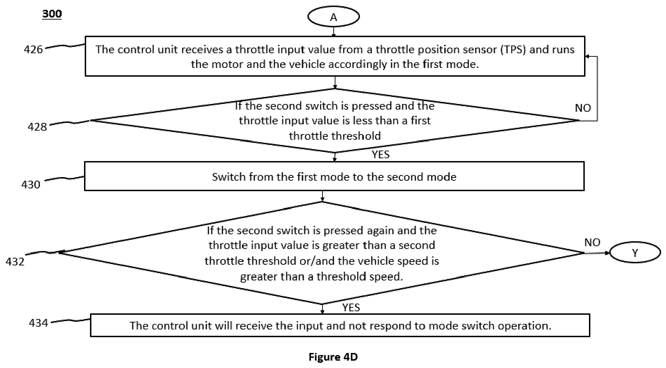

Figure 4A, 4B,4C and 4D illustrates, the method steps involved in the method 300 for selecting a ride mode of the vehicle 100. At step 402, the vehicle 100 is started by a control unit 250 in an idle mode as the ride mode of the vehicle 100 when a key is operated or by keyless authentication.

At step 404, one or more vehicle parameters are received by the control unit 250. The one or more vehicle parameters are received from at least one of a plurality of sensors and Vehicle Control Unit (VCU) 230. In an embodiment, the one or more parameters include a battery charger connection status, a side stand switch status, the vehicle turned OFF status and an idling time of the vehicle 100.

At step 406, the first input signal and a brake signal from a brake switch 220 are received by the control unit 250 for a pre-defined time.

At step 408, the ride mode of the vehicle 100 is switched to a default mode from the idle mode by the control unit 250 when the first input signal and the brake signal are received and the one or more vehicle parameters satisfy a pre-defined set of conditions. The default mode being one of the first mode and the second mode. If the control unit 250 does not receive the first input signal and the brake signal and the one or more vehicle parameters are not satisfying the pre-defined set of conditions, then the vehicle 100 will remain in idle mode and will not switch to any ride mode and the method 300 reverts to step 402. In an embodiment, the pre-defined set of conditions comprise the condition when the side stand is not engaged, brake engaged, battery charger not operational, an idling time of the vehicle is greater than 5 seconds, and the battery charge level is sufficient to start.

At step 410, the vehicle 100 is switched to a first mode as the default mode when the first switch 260 and the brake switch 220 are pressed and the one or more vehicle parameters satisfy a pre-defined set of conditions. Thereafter the method 300 proceeds to step 414 (as illustrated in Figure 4B).

Alternatively, if the vehicle 100 is switched to a second mode as a default mode, when the first switch 260 and the brake switch 220 are pressed and the one or more vehicle parameters satisfy a pre-defined set of conditions, then the method 300 arrives at step 412. Thereafter, the method 300 proceeds to step 420 from step 412 (as illustrated in Figure 4C).

At step 414, the control unit 250 receives a throttle input value from a throttle position sensor (TPS) and runs the motor 280 and the vehicle 100 accordingly. The method 300 thereafter proceeds to step 416 or step 426.

At step 416, the control unit 250 will receive the second input signal when the second switch 270 is pressed. If the second input signal is received by the control unit 250 and the throttle input value is less than a first throttle threshold, then at step 418, the control unit 250 will switch the vehicle 100 from the first mode to the second mode. If the second switch 270 is not pressed and the throttle input value is not less than the first throttle threshold, then the vehicle 100 will remain in the first mode and the method 300 reverts to step 414.

In an alternative embodiment, the method 300 comprises the steps of prohibiting by the control unit 250, the switching from the second mode to the first mode on receiving the second input signal when the throttle input value is greater than the second throttle threshold and/or the vehicle speed is greater than the threshold speed. In this embodiment, the method 300 from step 414 moves to step 426. At step 426, when the vehicle 100 is in the first mode, the control unit 250 receives the throttle input value from the throttle position sensor (TPS) 210 and runs the motor 280 and the vehicle 100 accordingly. At step 428, if the second switch 270 is pressed and the throttle input value is less than the second throttle threshold, then at step 430, the vehicle 100 will switch from the first mode to the second mode. And at step 428, if the second switch 270 is not pressed and the throttle input value is not less than the second throttle threshold, then the method 300 reverts to step 426. At step 432, the second switch 270 is pressed again to switch from the second mode to the first mode and if the throttle input value is greater than the second throttle threshold or/and the vehicle speed is greater than the threshold speed, then at step 434, the control unit 250 will receive the input but will not respond to mode switch operation. The vehicle 100 will remain in second mode.

In the embodiment wherein the vehicle 100 is in the second mode at step 412, the method 300 proceeds to step 420. At step 420, the control unit 250 receives a throttle input value from a throttle position sensor (TPS) 210 and runs the motor 280 and the vehicle 100 accordingly in the second mode.

At step 422, the control unit 250 will receive the second input signal when the second switch 270 is pressed. If the second input signal is received by the control unit 250 and the throttle input value is less than a second throttle threshold and a vehicle speed is less than the threshold speed, at step 424, then the control unit 250 will switch the vehicle 100 from the second mode to the first mode and runs the vehicle 100 according to the received throttle input value. If the second switch 270 is not pressed and the throttle input value is not less than the second throttle threshold and the vehicle speed is not less than the threshold speed, then vehicle 100 will remain in the second mode and the method 300 reverts to step 420.

Advantageously, the present invention provides smooth switching from low energy mode (economy mode) to high energy mode (power mode) and the rider does not feel any jerk or discomfort. As the present invention provides a mechanism for interlock to avoid such transition.

The present invention tried to solve the problem of the jerky ride or sudden acceleration and deceleration in transition between the ride modes. It will also increase the performance of the battery and the motor 280. Also, the present invention suggests the system where not only an unintended selection of drive mode is avoided but also at the same time facilitates a smooth transition between the modes of the vehicle 100. It also eases the process of selection of a ride mode and also changing the ride modes comfortably even while riding the vehicle 100. So, the present invention suggests a system that eliminates the confusion regarding operation of the switch while riding. As per the present invention, the rider can avoid accidental conditions in the vehicle 100, such side stand getting actuated or the vehicle 100 getting turned off, in such cases the mode switching is disabled.

While the present invention has been described with respect to certain embodiments, it will be apparent to those skilled in the art that various changes and modification may be made without departing from the scope of the invention as defined in the following claims.

## Claims

1. A system (200) for selecting a ride mode of a vehicle (100), the system comprising:
a first switch (260), disposed on the vehicle (100) in proximity to a rider for generating a first input signal to switch the vehicle (100) to one of a first mode and a second mode from an idle mode as the ride mode of the vehicle (100);
a second switch (270), disposed on the vehicle (100) in proximity to the rider for generating a second input signal to switch between the first mode and the second mode; and
a control unit (250), the control unit (250) is communicably coupled to the first switch (260) and the second switch (270), the control unit (250) is configured to select the ride mode to be one of the idle mode, the first mode, and the second mode, based on a combination of one or more vehicle parameters, the first signal, and the second signal in real-time,
**characterized in that**
the control unit (250) is configured to prohibit the switching from the second mode to the first mode on receiving the second input signal when the throttle input value is greater than a second throttle threshold and/or the vehicle speed is greater than a threshold speed.

2. The system (200) as claimed in claim 1, wherein the control unit (250) is configured to:
start the vehicle (100) in the idle mode when a key is operated or by keyless authentication;
receive the one or more vehicle parameters from a plurality of sensors of the vehicle (100) or a Vehicle Control Unit (VCU) (230);
receive the first input signal and a brake signal from a brake switch (220) for a pre-defined time;
switch to one of the first mode or the second mode from the idle mode when the first input signal and the brake signal are received, and the one or more vehicle parameters satisfy a pre-defined set of conditions;
receive the second input signal and a throttle input value from a throttle position sensor (TPS) (210);
switch from the first mode to the second mode when the second input signal is received, and the throttle input value is less than a first throttle threshold; or
switch from the second mode to the first mode when the second input signal is received, the throttle input value is less than a second throttle threshold and a vehicle speed is less than the threshold speed.

3. The system (200) as claimed in claim 1, wherein the one or more vehicle parameters received by the control unit (250) comprise: a battery charger connection status, a side stand switch status, the vehicle turned OFF status and an idling time of the vehicle (100).

4. The system (200) as claimed in claim 1, wherein one of the first mode and the second mode is a default mode set by the rider or an Original Equipment Manufacturer (OEM).

5. The system (200) as claimed in claim 1, wherein the first mode is an economy mode and the second mode is a power mode.

6. The system (200) as claimed in claim 1, wherein the first switch (260) and the second switch (270) are a press and release switch.

7. A method (300) for selecting a ride mode of a vehicle (100), comprising steps of:
starting a vehicle (100), by a control unit (250), in an idle mode as the ride mode of the vehicle (100), when a key is operated or by keyless authentication;
receiving, by the control unit (250), one or more vehicle parameters from at least one of a plurality of sensors and a Vehicle Control Unit (VCU) (230);
receiving, by the control unit (250), a first input signal and a brake signal from a brake switch (220) for a pre-defined duration of time, the first input signal is generated by a first switch (260) to switch the ride mode of the vehicle (100) to a default mode from the idle mode, the default mode is one of a first mode and a second mode;
**characterized in that** the method comprises the further steps of:
switching, by the control unit (250), the ride mode of the vehicle (100) from the idle mode to the default mode, the default mode being one of the first mode and the second mode, when the first input signal and the brake signal are received, and the one or more vehicle parameters satisfy a pre-defined set of conditions; and
receiving, by the control unit (250), the second input signal and a throttle input value from a throttle position sensor (TPS) (210), the second input signal is generated by a second switch (270) to switch between the first mode and the second mode; and
switching, by the control unit (250), the ride mode between the first mode and the second mode on receiving the second signal and throttle input value when the vehicle (100) is in motion,
wherein switching, by the control unit (250), the ride mode between the first mode and the second mode comprising step of:
switching the ride mode of vehicle (100) from the first mode to the second mode, by the control unit (250), when the second input signal is received, and the throttle input value is less than a first throttle threshold; or
switching from the second mode to the first mode, by the control unit (250), when the second input signal is received, the throttle input value is less than a second throttle threshold and a vehicle speed is less than a threshold speed.

8. The method (300) as claimed in claim 7, further comprising step of: prohibiting, by the control unit (250), the switching from the second mode to the first mode on receiving the second input signal when the throttle input value is greater than a second throttle threshold and/or the vehicle speed is greater than the threshold speed.

9. The method (300) as claimed in claim 7, wherein the one or more parameters comprising: a battery charger connection status, a side stand switch status, the vehicle turned OFF status and an idling time of the vehicle (100).

10. The method (300) as claimed in claim 7, wherein the first mode is an economy mode and the second mode is a power mode.

11. The method (300) as claimed in claim 7, wherein the first switch (260) and the second switch (270) are a press and release switch.

12. The method (300) as claimed in claim 7, wherein the default mode is set by the rider or an Original Equipment Manufacturer (OEM).

## Patentansprüche

1. System (200) zum Auswählen eines Fahrmodus eines Fahrzeugs (100), wobei das System umfasst:
einen ersten Schalter (260), der auf dem Fahrzeug (100) in der Nähe eines Fahrers für das Erzeugen eines ersten Eingangssignals zum Umschalten des Fahrzeugs (100) von einem Leerlaufmodus in einen ersten Modus oder einen zweiten Modus als Fahrmodus des Fahrzeugs (100) angeordnet ist;
einen zweiten Schalter (270), der auf dem Fahrzeug (100) in der Nähe des Fahrers für das Erzeugen eines zweiten Eingangssignals zum Umschalten zwischen dem ersten Modus und dem zweiten Modus angeordnet ist; und
eine Steuereinheit (250), wobei die Steuereinheit (250) kommunikationsmäßig mit dem ersten Schalter (260) und dem zweiten Schalter (270) gekoppelt ist, wobei die Steuereinheit (250) dazu eingerichtet ist, den Fahrmodus als einen von dem Leerlaufmodus, dem ersten Modus und dem zweiten Modus aufgrund einer Kombination von einem oder mehreren Fahrzeugparametern, dem ersten Signal und dem zweiten Signal in Echtzeit auszuwählen,
**dadurch gekennzeichnet, dass**
die Steuereinheit (250) dazu eingerichtet ist, das Umschalten von dem zweiten Modus in den ersten Modus beim Empfang des zweiten Eingangssignals zu verbieten, wenn der Drosselklappen-Eingangswert größer als ein zweiter Drosselklappen-Schwellenwert ist und/oder die Fahrzeuggeschwindigkeit größer als eine Schwellengeschwindigkeit ist.

2. System (200) nach Anspruch 1, wobei die Steuereinheit (250) eingerichtet ist zum:
Starten des Fahrzeugs (100) im Leerlaufmodus bei Betätigung eines Schlüssels oder durch schlüssellose Authentifizierung;
Empfangen von einem oder mehreren Fahrzeugparametern von einer Vielzahl von Sensoren des Fahrzeugs (100) oder einer Fahrzeugsteuereinheit (VCU) (230);
Empfangen des ersten Eingangssignals und eines Bremssignals von einem Bremsschalter (220) über eine vordefinierte Zeit;
Umschalten in den ersten Modus oder den zweiten Modus aus dem Leerlaufmodus, wenn das erste Eingangssignal und das Bremssignal empfangen werden und der eine bzw. die mehreren Fahrzeugparameter einen vordefinierten Satz von Bedingungen erfüllen;
Empfangen des zweiten Eingangssignals und eines Drosselklappen-Eingangswertes von einem Drosselklappen-Positionssensor (TPS) (210);
Umschalten vom ersten Modus in den zweiten Modus, wenn das zweite Eingangssignal empfangen wird und der Drosselklappen-Eingangswert kleiner als ein erster Drosselklappen-Schwellenwert ist; oder
Umschalten von dem zweiten Modus in den ersten Modus, wenn das zweite Eingangssignal empfangen wird, der Drosselklappen-Eingangswert kleiner als ein zweiter Drosselklappen-Schwellenwert ist und eine Fahrzeuggeschwindigkeit kleiner als die Schwellengeschwindigkeit ist.

3. System (200) nach Anspruch 1, wobei der eine bzw. die mehreren Fahrzeugparameter, die von der Steuereinheit (250) empfangen werden, umfassen: einen Batterieladegerät-Verbindungsstatus, einen Seitenständerschalterstatus, den Status "Fahrzeug ausgeschaltet" und eine Leerlaufzeit des Fahrzeugs (100).

4. System (200) nach Anspruch 1, wobei entweder der erste Modus oder der zweite Modus ein durch den Fahrer oder einen Hersteller der Originalausrüstung (OEM) eingestellter Standardmodus ist.

5. System (200) nach Anspruch 1, wobei der erste Modus ein Sparmodus und der zweite Modus ein Leistungsmodus ist.

6. System (200) nach Anspruch 1, wobei der erste Schalter (260) und der zweite Schalter (270) durch Drücken und Loslassen betätigte Schalter sind.

7. Verfahren (300) zum Auswählen eines Fahrmodus eines Fahrzeugs (100), umfassend folgende Schritte:
Starten eines Fahrzeugs (100) durch eine Steuereinheit (250) in einem Leerlaufmodus als dem Fahrmodus des Fahrzeugs (100) bei Betätigung eines Schlüssels oder durch schlüssellose Authentifizierung;
Empfangen von einem oder mehreren Fahrzeugparametern von zumindest einem einer Vielzahl von Sensoren und einer Fahrzeugsteuereinheit (VCU) (230) seitens der Steuereinheit (250);
Empfangen eines ersten Eingangssignals und eines Bremssignals von einem Bremsschalter (220) seitens der Steuereinheit (250) über eine vordefinierte Zeitdauer, wobei das erste Eingangssignal von einem ersten Schalter (260) erzeugt wird, um den Fahrmodus des Fahrzeugs (100) aus dem Leerlaufmodus in einen Standardmodus zu schalten, wobei der Standardmodus entweder ein erster Modus oder ein zweiter Modus ist;
**dadurch gekennzeichnet, dass** das Verfahren die folgenden weiteren Schritte umfasst:
Umschalten des Fahrmodus des Fahrzeugs (100) vom Leerlaufmodus in den Standardmodus durch die Steuereinheit (250), wobei der Standardmodus entweder der erste Modus oder der zweite Modus ist, wenn das erste Eingangssignal und das Bremssignal empfangen werden und der eine bzw. die mehreren Fahrzeugparameter einen vordefinierten Satz von Bedingungen erfüllen; und
Empfangen des zweiten Eingangssignals und eines Drosselklappen-Eingangswertes von einem Drosselklappen-Positionssensor (TPS) (210) seitens der Steuereinheit (250), wobei das zweite Eingangssignal von einem zweiten Schalter (270) zum Umschalten zwischen dem ersten Modus und dem zweiten Modus erzeugt wird; und
Umschalten des Fahrmodus zwischen dem ersten Modus und dem zweiten Modus durch die Steuereinheit (250) bei Empfang des zweiten Signals und Drosselklappen-Eingangswertes, wenn das Fahrzeug (100) in Bewegung ist,
wobei das Umschalten des Fahrmodus zwischen dem ersten Modus und dem zweiten Modus durch die Steuereinheit (250) folgenden Schritt umfasst::
Umschalten des Fahrmodus des Fahrzeugs (100) vom ersten Modus in den zweiten Modus durch die Steuereinheit (250), wenn das zweite Eingangssignal empfangen wird und der Drosselklappen-Eingangswert kleiner als ein erster Drosselklappen-Schwellenwert ist; oder
Umschalten vom zweiten Modus in den ersten Modus durch die Steuereinheit (250), wenn das zweite Eingangssignal empfangen wird, der Drosselklappen-Eingangswert kleiner als ein zweiter Drosselklappen-Schwellenwert ist und eine Fahrzeuggeschwindigkeit kleiner als eine Schwellengeschwindigkeit ist.

8. Verfahren (300) nach Anspruch 7, zudem umfassend:
Verbieten des Umschaltens vom zweiten Modus in den ersten Modus durch die Steuereinheit (250) bei Empfang des zweiten Eingangssignals, wenn der Drosselklappen-Eingangswert größer als ein zweiter Drosselklappen-Schwellenwert ist und/oder die Fahrzeuggeschwindigkeit größer als die Schwellengeschwindigkeit ist.

9. Verfahren (300) nach Anspruch 7, wobei der eine bzw. die mehreren Parameter umfassen:
einen Batterieladegerät-Verbindungstatus, einen Seitenständerschalterstatus, den Status "Fahrzeug ausgeschaltet" und eine Leerlaufzeit des Fahrzeugs (100).

10. Verfahren (300) nach Anspruch 7, wobei der erste Modus ein Sparmodus ist und der zweite Modus ein Leistungsmodus ist.

11. Verfahren (300) nach Anspruch 7, wobei der erste Schalter (260) und der zweite Schalter (270) durch Drücken und Loslassen betätigte Schalter sind.

12. Verfahren (300) nach Anspruch 7, bei dem der Standardmodus durch den Fahrer oder einen Hersteller der Originalausrüstung (OEM) eingestellt wird.

## Revendications

1. Système (200) pour sélectionner un mode de conduite d'un véhicule (100), le système comprenant :
un premier commutateur (260), placé sur le véhicule (100) à la proximité d'un conducteur, pour générer un premier signal d'entrée afin de faire passer le véhicule (100) d'un mode à l'autre à partir d'un mode inactif en tant que mode de conduite du véhicule (100) ;
un deuxième commutateur (270), placé sur le véhicule (100) à la proximité du conducteur, pour générer un deuxième signal d'entrée afin d'alterner entre le premier mode et le deuxième mode ; et
une unité de commande (250), l'unité de commande (250) étant couplée de manière communicable au premier commutateur (260) et au deuxième commutateur (270), l'unité de commande (250) est configurée pour sélectionner le mode de conduite pour être l'un de : le mode inactif, le premier mode et le deuxième mode ; sur la base d'une combinaison d'un ou plusieurs paramètres du véhicule, du premier signal et du deuxième signal en temps réel,
**caractérisé en ce que**
l'unité de commande (250) est configurée pour interdire le passage du deuxième mode au premier mode lors de la réception du deuxième signal d'entrée lorsque la valeur d'entrée de l'accélérateur est supérieure à un deuxième seuil d'accélérateur et/ou que la vitesse du véhicule est supérieure à une vitesse seuil.

2. Système (200) selon la revendication 1, dans lequel l'unité de commande (250) est configurée pour :
démarrer le véhicule (100) en mode inactif lors de l'actionnement d'une clé ou par authentification sans clé ;
recevoir un ou plusieurs paramètres du véhicule provenant d'une pluralité de capteurs du véhicule (100) ou d'une unité de contrôle du véhicule (VCU) (230) ;
recevoir le premier signal d'entrée et un signal de freinage d'un contacteur de frein (220) pendant une durée prédéfinie ;
passer du mode inactif au premier ou deuxième mode lorsque le premier signal d'entrée et le signal de freinage sont reçus et un ou plusieurs paramètres du véhicule satisfont à un ensemble de conditions prédéfinies ;
recevoir le deuxième signal d'entrée et une valeur d'entrée de l'accélérateur en provenance d'un capteur de position de l'accélérateur (TPS) (210) ;
passer du premier mode au deuxième mode lorsque le deuxième signal d'entrée est reçu et la valeur d'entrée de l'accélérateur est inférieure à un premier seuil d'accélérateur ; ou
passer du deuxième mode au premier mode lorsque le deuxième signal d'entrée est reçu, la valeur d'entrée de l'accélérateur est inférieure à un deuxième seuil d'accélérateur et la vitesse du véhicule est inférieure à la vitesse seuil.

3. Système (200) selon la revendication 1, dans lequel le paramètre ou les paramètres du véhicule reçus par l'unité de commande (250) comprennent : un état de connexion du chargeur de batterie, un état de commutation de la béquille latérale, l'état d'arrêt du véhicule et un temps de marche inactif du véhicule (100).

4. Système (200) selon la revendication 1, dans lequel l'un du premier mode et du deuxième mode est un mode par défaut défini par le conducteur ou un fabricant d'équipement d'origine (OEM).

5. Système (200) selon la revendication 1, dans lequel le premier mode est un mode d'économie et le deuxième mode est un mode de puissance.

6. Système (200) selon la revendication 1, dans lequel le premier commutateur (260) et le deuxième commutateur (270) sont des commutateurs à pression et relâchement.

7. Procédé (300) de sélection d'un mode de conduite d'un véhicule (100), comprenant les étapes de :
démarrer un véhicule (100), par une unité de commande (250), dans un mode inactif en tant que mode de conduite du véhicule (100), lors de l'actionnement d'une clé ou par authentification sans clé ;
recevoir un ou plusieurs paramètres du véhicule provenant d'au moins un capteur parmi plusieurs et d'une unité de contrôle du véhicule (230), par l'unité de commande (250) ;
recevoir un premier signal d'entrée et d'un signal de freinage provenant d'un commutateur de freinage (220) pendant une durée prédéfinie, par l'unité de commande (250), le premier signal d'entrée étant généré par un premier commutateur (260) pour faire passer le mode de conduite du véhicule (100) à un mode par défaut à partir du mode inactif, le mode par défaut étant l'un d'un premier mode et d'un deuxième mode ;
**caractérisé en ce que** le procédé comprend en outre les étapes de :
faire passer le mode de conduite du véhicule (100), par l'unité de commande (250), du mode inactif au mode par défaut, le mode par défaut étant l'un du premier mode et du deuxième mode, lorsque le premier signal d'entrée et le signal de freinage sont reçus et le paramètre ou les plusieurs paramètres du véhicule satisfont à un ensemble prédéfini de conditions ; et
recevoir du deuxième signal d'entrée et d'une valeur d'entrée de l'accélérateur en provenance d'un capteur de position de l'accélérateur (TPS) (210), par l'unité de commande (250), le deuxième signal d'entrée étant généré par un deuxième commutateur (270) pour alterner entre le premier mode et le deuxième mode ; et
alterner le mode de conduite entre le premier mode et le deuxième mode, par l'unité de commande (250), lors de la réception du deuxième signal et de la valeur d'entrée de l'accélérateur lorsque le véhicule (100) est en mouvement,
dans lequel alterner le mode de conduite entre le premier mode et le deuxième mode, par l'unité de commande (250), comprend l'étape de :
faire passer le mode de conduite du véhicule (100) du premier mode au deuxième mode, par l'unité de commande (250), lorsque le deuxième signal d'entrée est reçu et la valeur d'entrée de l'accélérateur est inférieure à un premier seuil d'accélérateur ; ou
faire passer du deuxième mode au premier mode, par l'unité de commande (250), lorsque le deuxième signal d'entrée est reçu, la valeur d'entrée de l'accélérateur est inférieure à un deuxième seuil d'accélérateur et la vitesse du véhicule est inférieure à une vitesse seuil.

8. Procédé (300) selon la revendication 7, comprenant en outre l'étape de : interdire, par l'unité de commande (250), la commutation du deuxième mode au premier mode lors de la réception du deuxième signal d'entrée lorsque la valeur d'entrée de l'accélérateur est supérieure à un deuxième seuil d'accélérateur et/ou la vitesse du véhicule est supérieure à la vitesse seuil.

9. Procédé (300) selon la revendication 7, dans lequel le paramètre ou les paramètres comprennent : un état de connexion du chargeur de batterie, un état de commutation de la béquille latérale, l'état d'arrêt du véhicule et un temps de marche inactif du véhicule (100).

10. Procédé (300) selon la revendication 7, dans lequel le premier mode est un mode d'économie et le deuxième mode est un mode puissance.

11. Procédé (300) selon la revendication 7, dans lequel le premier commutateur (260) et le deuxième commutateur (270) sont des commutateurs à pression et relâchement.

12. Procédé (300) selon la revendication 7, dans lequel le mode par défaut est défini par le conducteur ou un fabricant d'équipement d'origine (OEM).
